# EUROPEAN PATENT SPECIFICATION

(11) **EP 0 664 077 B1**
(45) Date of publication and mention of the grant of the patent: **06.10.1999**
(21) Application number: 95200156.8
(22) Date of filing: 24.01.1995
(51) Int. Cl.: A01F 29/20

(54) **Compressor rolls for a forage harvester**
Presswalzen für Feldhäcksler
Cylindres de conditionnement pour faucheuse-hacheuse

(30) Priority: 25.01.1994 GB 9401410
(43) Date of publication of application: 26.07.1995
(73) Proprietor: NEW HOLLAND BELGIUM N.V., B-8210 Zedelgem (BE)
(72) Inventor: Vansteelant, Marc G., B-8210 Zedelgem (BE)
(74) Representative: Vandenbroucke, Alberic

(56) References cited:
- EP-A- 0 177 995
- WO-A-81/02966
- DE-A- 4 122 338
- DE-B- 1 141 829
- DE-U- 8 804 590
- US-A- 3 146 568

## Description

The present invention relates generally to forage harvesters having means for the processing of crop material including maize kernels, said means comprising a compressor roll assembly, operable to crack the maize kernels. More particularly, the invention relates to the construction of the compressor rolls as such and to their mounting onto the forage harvester.

The crop processing means of a forage harvester is used to receive crop material harvested from the field and comminute it into forage which is fed by a blower to a temporary container, before being foddered to livestock. In order to facilitate the complete digestion of the crop material, including the maize kernels, the outer skin of the kernels has to be cracked or cut. This can be done by a set of closely adjacent, cooperating compressor rolls with fluted surfaces, installed in front of the blower, as shown in EP-A-0.177.995.

The flow of the crop material between the compressor rolls will inevitably blunt the fluted surfaces thereof, thus increasing the space between the rolls and reducing the damaging effect on the kernels. Conventionally, the fluted surfaces of conventional compressor rolls are welded to the shafts which rotatably support said rolls, so that, upon excessive wear of the surfaces, this complete weld assembly has to be removed and replaced.

The growing processing capacity of the modern forage harvesters, requires larger, and hence more expensive compressor rolls, and the increased crop material flow inbetween causes a quicker wear of the fluted surfaces, thus increasing the replacement frequency. In order to reduce the costs involved, it has been proposed to replace only the fluted surface instead of the complete roll, as shown in DE-U-88.04.590. According to this document the roll can be disassembled for replacement of the entire surface. But this machined and hardened component is still the most expensive component of the roll, maintaining the replacement costs at a very high level.

Moreover, in most cases, the wear is not uniformly spread over the full width of the rolls. Transition pieces between the compressor rolls and the blower may hinder the passage of crop material near the sides of the rolls and locally enhance the wear of the surfaces. Also, the cutting edges of the comminuting means may be positioned under an angle relative to the rotating axis thereof, hence projecting the crop material sideways and loading one section of the rolls more than another.

Damage to the rolls, as caused by foreign objects, will also be confined to a portion of the fluted surfaces. But, in all cases, a local deficiency of a prior art roll according to DE-U-88.04.590, will still engender the replacement of an entire fluted surface, being the most expensive component of the roll.

In the technical field of the mower-conditioners it is known to use conditioner rolls having a surface which is constituted by interchangeable elements as illustrated in US-A-3.146.568. Herein the elements are not self-supporting and a cylindrical core extending over the full length of the roll is needed for sustaining the surface elements. After extensive use and consequent wear of the conditioner rolls, the elements tend to stick to the core and they cannot easily be removed without the use of dedicated tooling. If the core got damaged, e.g. by the passage of stones, it may be completely impossible to slide the elements off this core and it may be required to cut the elements open in order to remove them. Hence these elements are lost for use in another section of the conditioner roll.

It hence is a prime objective of the present invention to reduce the costs involved in repairing and replacing compressor rolls, which have suffered from local excessive wear and damages.

According to the invention, a forage harvester is provided having crop processing means for handling crop material including maize kernels, the crop processing means comprising:
- cutting means operable to comminute crop material;
- a compressor roll assembly, comprising a set of closely adjacent, cooperating compressor rolls disposed to receive comminuted crop material from the cutting means and operable to crack maize kernels in said crop material, said rolls comprising a substantially cylindric crop-engaging surface and two end portions which are detachably affixed to said crop engaging surface; and
- blower means receiving the comminuted and cracked crop material from said roll assembly and operable to convey said material to a subsequent handling apparatus.

The forage harvester is characterized in that:
said crop engaging surface comprises a plurality of exchangeable surface elements;
each end portion is provided with a distinct shaft; and
said compressor rolls further comprise intermediate members disposed parallel to and between said end portions and having central bores for receiving therein the inner end of said shafts.

According to one embodiment of the invention, the compressor rolls comprise a wide central surface element to which narrower cylindrical side elements and end portions with stub shafts are secured.

According to another embodiment of the invention, the surface of the compressor rolls is composed by a plurality of interchangeable surface elements which are retained by end portions and intermediate members.

Preferably, the rolls are installed within a frame and their shafts are journalled in bearing housings which lie outside said frame. The mounting of the bearing housings to the frame permits the removal of a complete roll together with these housings, whereafter direct access is given to the bolt means for demounting of the end portions, without any need for prior disassembly of the bearing housings from the journals of the compressor roll.

A forage harvester in accordance with the present invention will now be described in greater detail, by way of example, with reference to the following drawings, in which:
Figure 1 is a side elevational view of a forage harvester, comprising a front unit, mounted to a main frame and a crop collecting apparatus;
Figure 2 is an enlarged side view of the rear portion of the front unit, comprising a compressor roll assembly with an upper and a lower compressor roll;
Figure 3 shows a sectional view of the compressor roll assembly, taken along lines III-III of Figure 2 and comprising compressor rolls according to a first embodiment of the invention;
Figure 4 is a side view of the upper compressor roll of Figure 3, as removed from the forage harvester;
Figure 5 is a side view of the lower compressor roll of Figure 3, as removed from the forage harvester;
Figure 6 is a partial front view of a disassembled upper compressor roll of Figure 3;
Figure 7 is a sectional view of a compressor roll according to a second embodiment of the invention, comprising a plurality of interchangeable surface elements; and
Figure 8 is a perspective view of one surface element of the roll of Figure 7.

The terms "front", "rear", "forward", "rearward", "right" and "left" used throughout the specification are determined with respect to the normal direction of movement of the machine in operation and are not to be construed as limiting terms.

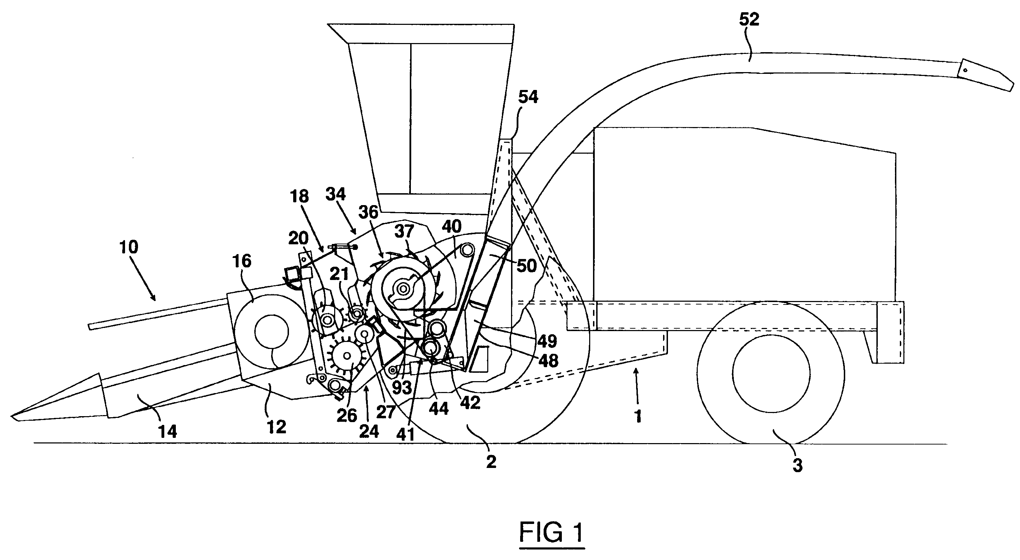

With reference to the drawings and more particularly to Figure 1, there is shown a forage harvester having a main frame 1 on which are mounted ground engaging traction wheels 2 and steering wheels 3. The forage harvester is shown equipped with a crop collecting apparatus, in the form of a row crop attachment 10, suitable for the harvesting of maize, but which can be replaced with a conventional windrow pick-up device or a conventional cutter bar attachment, depending on the type of crop to be harvested. Customarily, the row crop attachment 10 comprises an attachment frame 12, which supports a plurality of row crop units 14, operable to harvest maize stalks from the field and to convey the same rearwardly to an auger 16, which in turn delivers the crop material to the bite of feeder means installed in a front unit of the forage harvester.

Said feeder means comprise lower feeder means, including a forward lower feedroll 26, and a smooth, rear lower feedroll 27, and upper feeder means, including an upper forward feedroll 20 and an upper rear feedroll 21. The lower feedrolls 26, 27 are rotatably mounted in a lower feeder frame 24 and the upper feedrolls 20, 21 are mounted in an upper feeder frame 18, to which the row crop attachment 10 is attached. Said upper and lower feeder means rotate to convey the crop material inbetween to a cutterhead 36, which is mounted within a cutterhead frame 34 and comprises a plurality of knives 37, generating a cylindrical peripheral shape or profile, when the cutterhead 36 is rotated.

The knives 37 cooperate with a fixed shearbar to cut the crop material to length and project it into the bite of a compressor roll assembly 41, comprising a frame 42 and a set of counter-rotating compressor rolls 44 mounted therein, which rolls crack the kernels which are left in the chopped material and deliver the whole to a blower rotor 49 which is installed within a blower housing 48, attached to vertical beams 54 of the main frame 1. The blower rotor 49 comprises a plurality of paddles 50, which throw the material upwardly through the blower outlet into a discharge spout 52, which can be positioned by an operator to direct the cut crop material as required, normally into a wagon which is moving alongside or behind the forage harvester.

The assembly of the cutterhead frame 34, the upper feeder frame 18 and the lower feeder frame 24 is removably attached to the main frame 1 by means of a cutterhead support 40, which is mounted to the vertical beams 54 of the main frame 1.

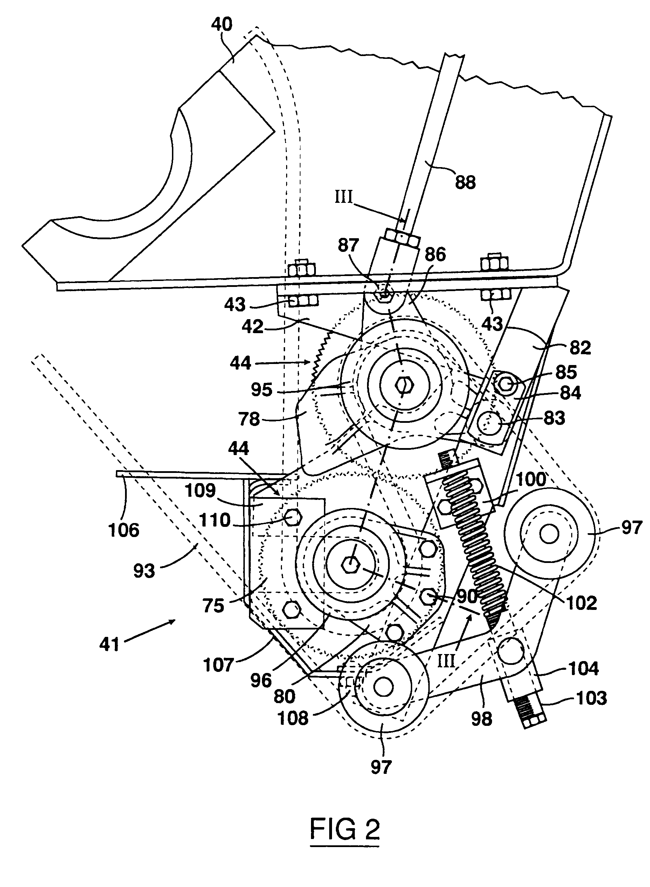

As shown in Figure 2, the compressor roll frame 42 is linked to said support 40 with bolts 43. After removal of said assembly of the frames 34, 18 and 24 from the support 40, direct access is gained to the bite of the compressor roll assembly 41.

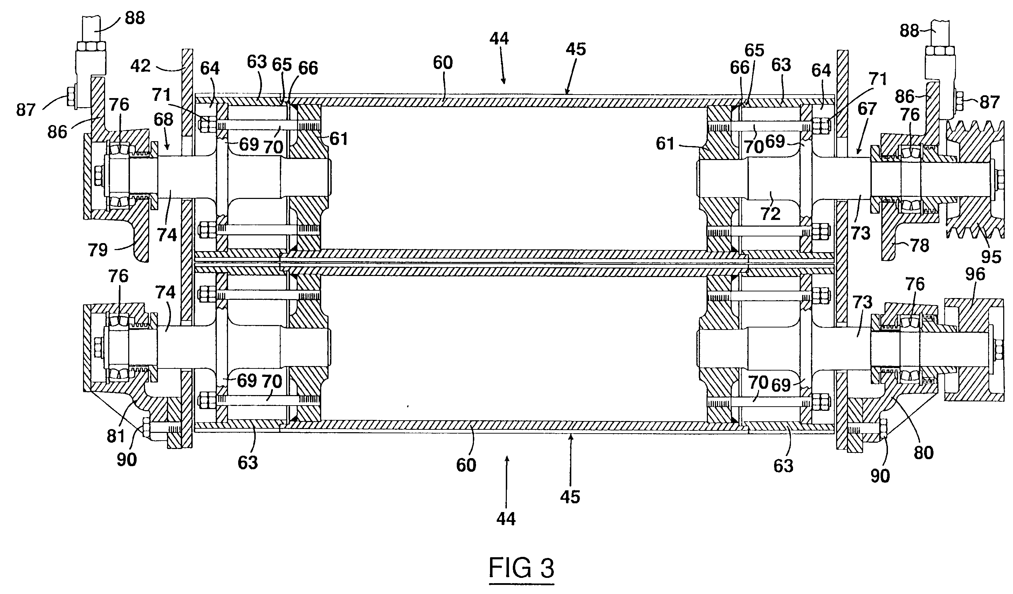

One type of compressor rolls 44 is shown in Figure 3. Said rolls 44 have a substantially cylindric, fluted surface 45 and comprise a wide central element 60 and two narrow outer elements 63. The central element 60 contains two centring plates 61 with a central bore, which are welded to the inside of the fluted surface. In the borders of said surface there are annular recesses 66, in which fit annular extensions 65 of the outer elements 63 as to centre the latter relative to the central element 60.

The outer ends of the elements 63 are sealed and supported by left and right end portions 67, 68, which comprise end plates 69, fitting in an annular recess 64 of said elements 63, and stub shafts 72, which closely fit in the bores of the centring plates 61. The end portions 67, 68 and the outer elements 63 are concurrently secured to the central element 60 by nuts 71, which are screwed on studs 70, passing through the plates 69 and affixed in the centring plates 61.

The end portions 67, 68 further comprise left and right journals 73, 74, which are rotatably supported in bearings 76. The upper compressor roll 44 is journalled in left and right bearing housings 78, 79. Its left journal 73 extends trough the housing 78 and carries a grooved sheave 95. The lower compressor roll 44 is journalled in left and right bearing housings 80, 81. Its left journal 74 extends through the housing 80 and carries a smooth sheave 96.

As illustrated in Figure 2, the upper bearing house 78 on the left hand side of the compressor roll assembly 41 is pivotably attached to its frame 42 by a pin 83, which extends through a bore in said bearing house 78 and in an overlying portion 82 of the frame 42. The pin 83 is welded to a plate 84 which is secured to the portion 82 by a bolt 85. A symmetric construction is used for the attachment of the upper bearing house 79 to the right hand side of the frame 42.

The upper compressor roll 44 can be pivoted up and down about the pins 83 in order to vary the clearance between the two rolls 44. Its position is controlled by left and right positioning rods 88, to which spring means (not shown) are attached, permitting upward movement of the roll 44 under action of the crop material flow. Bolts 87 link the rods 88 to top members 86 of the bearing houses 78, 79.

The upper roll journals 73, 74 lie in a front gap of the compressor roll frame 42 and can be pivoted up and down about the pins 83 within the space between said frame 42 and the cutterhead frame 34.

The bearing housings 80, 81 of the lower compressor roll 44 are immovably secured to the rear of the frame 42 with bolts 90. The journals 73, 74 of the lower roll 44 pass through apertures 75, which extend to the front of said frame 42.

The crop material from the cutterhead 36 is led to the bite of the compressor rolls 44 by a horizontal guide plate 106, which is attached to the cover plate 107 in front of the lower roll 44. A pair of side plates 109, affixed to the cover plate 107, covers the portion of the apertures 75 between the journals 73, 74 and said plate 107. Screws 108 and bolts 110 attach the plates 107, 109 to the frame 42.

A belt 93 (shown in phantom in Figure 2), which is driven by a pulley on the axle of the cutterhead 36, is trailed with its outer surface over the smooth sheave 96 and with its inner surface over the grooved sheave 95. Hence, the upper and lower rolls 44 are driven in opposite senses. The belt 93 is tensioned by a pair of idler sheaves 97, which are rotatably attached to an idler arm 98. A spring 102 is installed between said arm 98 and a bracket 100, which is affixed to the frame 42. The spring 102 is compressed by a screw 103, which is turned in a bushing 104, attached to the arm 98. This spring configuration maintains tension on the belt 93, when the upper roll 44 is pivoted about the pins 83.

The outer elements 63 of the compressor rolls 44 each have a width of approximately one eighth of the overall width of the rolls 44. These narrow elements 63 are situated in the areas that are subject most to the wearing action of the crop material and which therefore constitute the first portions which will have to be replaced.

In order to gain access to the rolls 44 for the replacement of any of the elements 60, 63, the tension on the belt 93 is released by loosening the spring 102 with screw 103, whereafter the belt 93 is removed from the sheaves 96-97. Then, the assembly of the cutterhead frame 34, the upper feeder frame 18 and the lower feeder frame 24 is lifted from the cutterhead support 40.

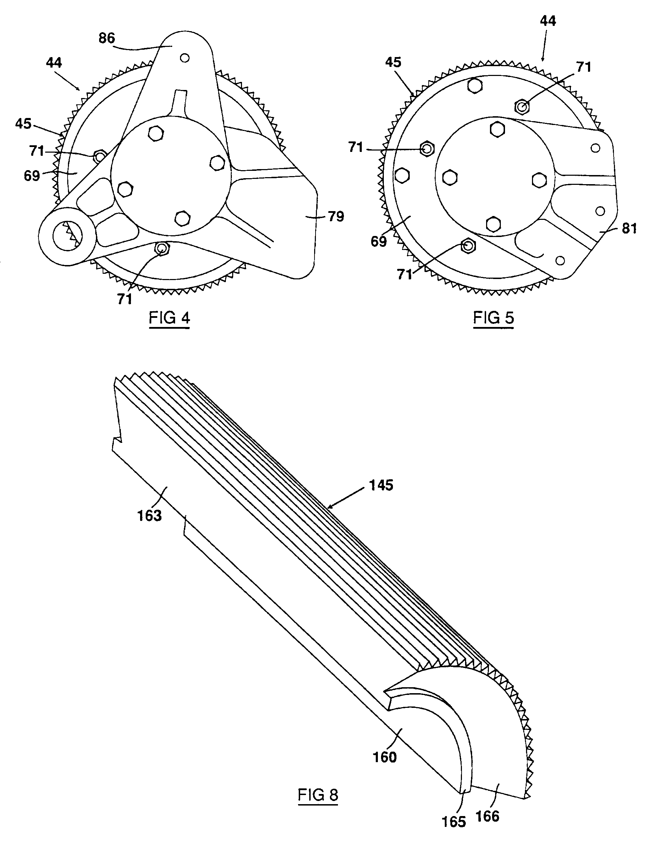

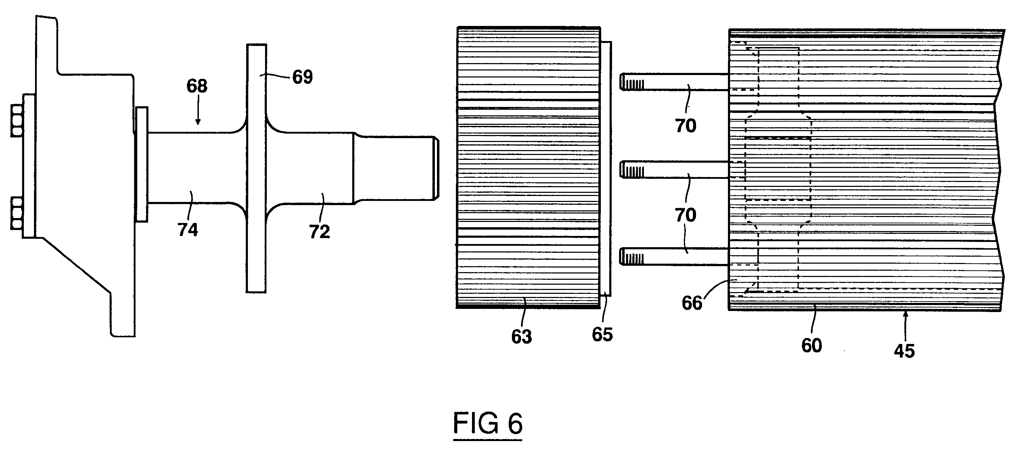

The bearing houses 78, 79 of the upper roll 44 are disconnected from the forage harvester by loosening the bolts 87 of the positioning rods 88 and the bolts 85, which retain the pivot pins 83. After removal of the pins 83, the roll 44 together with its bearing houses 78, 79 is taken out of the compressor roll frame 42. As shown in Figure 4, ready access is now provided to the nuts 71 which hold the end portions 67, 68 and the outer elements 63. All nuts 71 can be reached for unscrewing by simply rotating the bearing housings 78, 79 relative to the roll 44. Hence the end portions 67, 68 are removed from the roll 44 without prior disassembly of the housings 78, 79, as illustrated in Figure 6 in relation to one side of the roll 44 only. The elements 60, 63 are set loose simultaneously. After replacement of the worn element(s) 63 (60), the roll 44 is reassembled and reinstalled in the frame 42.

Access to the lower roll 44 can be gained after loosening the bolts 110 and the screws 108 and removing the plates 107, 109. The bearing houses 80, 81 are set loose by unscrewing the bolts 90, whereafter the lower roll is taken out of the frame 42 through the apertures 75. As shown in Figure 5, ready access is now provided to the nuts 71 which hold the end portions 67, 68 and the elements 63. Replacement of any worn elements 60, 63 now can take place as described above for the upper roll 44.

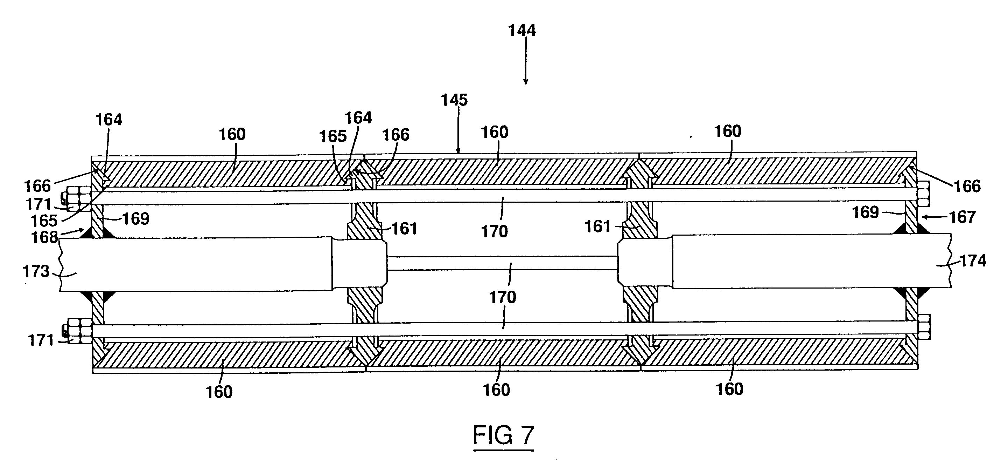

A somewhat different type of compressor roll 144 is illustrated in Figures 7 and 8. The surface 145 of the roll 144 is constituted by a plurality of identical elements 160, which are retained by end plates 169 and intermediate plates 161. Four elements 160, put together, form a complete cylindrical section of the roll 144. The complete surface 145 is constituted by juxtaposition of three of these cylindrical sections and is thus containing twelve elements 160 in total. The elements can be made out of hardenable precision cast iron. The fluted surfaces thereof can be heat treated to improve their resistance to wear.

At the borders where the elements 160 meet to form a cylindrical section, a straight, even surface 160 is provided. The other, curved borders have a annular extension 165 at the inner side and an annular protrusion 166 with a triangular cross-section at the outer side of the elements 160. Hence, the inner surface of the protrusion 166 is shaped as a portion of a cone centred on the axis of the compressor roll 144.

The intermediate plates 161 and the end plates 169 have at their circumference rims 164 which closely fit in the annular cavity between the annular extensions 165 and the protrusions 166 of the surface elements 160. The intermediate plates 161 thus have a cross-section in the form of two arrow-heads and the end plates 169 in the form of two halves of an arrow-head. These arrow-heads are proportioned so that some clearance is left between two adjacent cylindrical sections. The elements 160 are assembled with nuts 171 screwed on four long bolts 170, which pass through holes in all plates 161 and 169. When tension is applied on the bolts 170, the cone-shaped surfaces of the protrusions 166 will provide a playless setting of the elements 160 on the plates 161, 169.

To the end plates 169 are welded left and right shafts 173, 174, which are rotatably supported in the bearing houses 78-81 and the carry sheaves 95, 96 in a construction which is similar to that of Figure 3. The inner ends of the shafts 173 are slidingly received in central bores in the intermediate plates 161, so that the shafts 173 keep the end and intermediate plates 169 and 161 parallel and remain centred relative to the roll surface 145.

The upper and lower rolls 144 can be removed from the frame 42 without prior disassembly of their bearing housings 78-81 in the same way as described above for the first type of rolls 44. Thereafter the heads of the bolts 170 and the nuts 171 are readily accessible for the disassembly of the rolls 144 by rotating the bearing houses 78-81 relative to said rolls 144.

The operator can choose to replace a worn out or damaged surface element 160, or, in the case of non-uniform wear, prefer to interchange worn and less worn elements 160 in order to extend the life-time of the complete roll surface 145.

Other embodiments of a compressor roll assembly can be thought of without departing from the original idea of the invention. The kernel cracking surface of the rolls 44 can be of another type than the conventional fluted type. One of the rolls can be intended only to transport the crop material and consequently have a smooth surface, while the fluted surface of the other roll cracks the kernels in said material.

The number and the size of the surface elements 60, 63, 160 can vary, and so can the way that they fit in each other or in the side and intermediate plates 161, 169. The bearing housings 78-81 and the sides of the compressor roll frame 42 can be adapted as to enable the sideways removal of the rolls 44, 144 from the frame without prior disassembly of the bearing housings 78-81. Instead of assembling the roll 44, 144 with sets of four bolts or studs, it is conceivable to assemble a complete roll 44, 144 with only one long, central bolt, which holds together the outer shafts 73, 74, 173, 174 and the surface elements 60, 63, 160 inbetween.

It will be appreciated that thus are provided compressor rolls, which are easily accessible for service and repair operations, and which comprise a segmented surface, which does not have to be replaced as a whole in the case of local wear and/or damages.

## Claims

1. A forage harvester, having crop processing means for handling crop material including maize kernels, the crop processing means comprising:
- cutting means (36), operable to comminute crop material;
- a compressor roll assembly (41), comprising a set of closely adjacent, cooperating compressor rolls (44/144) disposed to receive comminuted crop material from the cutting means (36) and operable to crack maize kernels in said crop material, said rolls comprising a substantially cylindric crop-engaging surface (45/145) and two end portions (69/169) which are detachably affixed to said crop engaging surface (45/145); and
- blower means (49) receiving the comminuted and cracked crop material from said roll assembly (41) and operable to convey said material to a subsequent handling apparatus (52),
characterized in that:
said crop engaging surface (45/145) comprises a plurality of exchangeable surface elements (60, 63/160);
each end portion (69/169) is provided with a distinct shaft (72/173, 174); and
said compressor rolls (44/144) further comprise intermediate members (61/161) disposed parallel to and between said end portions (69/169) and having central bores for receiving therein the inner end of said shafts (72/173, 174).

2. A forage harvester according to claim 1, characterized in that said end portions (69/169) are detachably affixed to said crop engaging surface (45/145) by bolt means (70,71/170,171) which equally retain the elements (60,63/160) of the crop-engaging surface (45/145).

3. A forage harvester according to any of the preceding claims, characterized in that said surface elements (60/160) comprise means (65/165) for securing said elements (60,63/160) from radial displacement.

4. A forage harvester according to claim 3, characterized in that said securing means comprise an annular extension (65) along a border of an element (63), fitting in an annular recess (66) in a border of an adjacent element (60).

5. A forage harvester according to any of the preceding claims, characterized in that at least two surface elements (63/160) are interchangeable.

6. A forage harvester according to any of the preceding claims, characterized in that said surface elements (60, 63) have a generally cylindric form.

7. A forage harvester according to claim 6 when appended to claim 2, characterized in that the bolt means (70,71) are secured in the intermediate members (61) of one central surface element (60).

8. A forage harvester according to claim 6 or 7, characterized in that the crop-engaging surface (45) comprises two outer surface elements (63) which each have a width of less than a fourth part of the width of the complete surface (45).

9. A forage harvester according to claim 8, characterized in that the outer surface elements (63) have a width of less than a seventh part of the width of the complete surface (45).

10. A forage harvester according to any of the preceding claims, characterized in that the compressor rolls (44/144) are rotatably supported by bearings (76), of which the inner rings are mounted on stub shafts (73, 74) which are affixed to the end portions (69/169) of the compression rolls (44/144).

11. A forage harvester according to claim 10, characterized in that the compressor rolls (44/144) are disposed within a frame (42) and the outer rings of said bearings (76) are mounted in bearing housings (78-81) which are positioned outside said frame (42).

12. A forage harvester according to claim 11, characterized in that said frame (42) comprises slots (75) which enable the installation and removal of a compressor roll (44/144) from said frame (42) while the bearings (76) and bearing housings (78-81) remain attached to said roll.

13. A forage harvester according to claim 11, characterized in that the stub shafts (73,74) of a compressor roll (44/144) are mounted between the cutting means (36) and said frame (42).

14. A forage harvester according to claim 12 or 13, characterized in that, after removal of a compressor roll (44/144) from the frame (42), direct access is given to the bolt means (70,71/170,171) for disassembly of the end portions (69/169), without prior disassembly of the bearing housings (78-81) from the compressor roll (44/144).

15. A forage harvester according to any of the preceding claims, characterized in that said intermediate members (161) have annular protrusions (164) closely fitting in a cavity in a border of the surface elements (160).

16. A forage harvester according to claim 15, characterized in that said protrusions (164) have a surface (166) which is shaped as a portion of a cone centred on the axis of the compressor roll (144).

17. A forage harvester according to claim 1, characterized in that the crop engaging surface (145) is divided in a plurality of surface elements (160) along lines parallel to the central axis of said surface (145).

18. A forage harvester according to claim 17, characterized in that all surface elements (145) are interchangeable.

## Patentansprüche

1. Feldhäcksler mit Erntematerial-Verarbeitungseinrichtungen zur Verarbeitung von Erntematerial unter Einschluß von Maiskörnern, wobei die Erntematerial-Verarbeitungseinrichtungen folgendes umfassen:
- Schneideinrichtungen (36), die zur Zerkleinerung von Erntematerial betreibbar sind,
- eine Preß- oder Quetschwalzenbaugruppe (41) mit einem Satz von eng benachbarten, zusammenwirkenden Preß- oder Quetschwalzen (44/144), die zur Aufnahme von zerkleinertem Erntematerial von der Schneideinrichtung (36) angeordnet und zum Aufbrechen von Maiskörnern in dem Erntematerial betreibbar sind, wobei die Walzen eine im wesentlichen zylindrische, mit dem Erntematerial in Eingriff kommende Oberfläche (45/145) und zwei Endteile (69/169) aufweisen, die lösbar an der mit dem Erntematerial in Eingriff kommenden Oberfläche (45/145) befestigt sind, und
- Gebläseeinrichtungen (49), die das zerkleinerte und aufgebrochene Erntematerial von der Preß- oder Quetschwalzenbaugruppe (41) empfangen und zum Befördern des Materials zu einer nachfolgenden Handhabungsvorrichtung (52) betreibbar sind,
dadurch gekennzeichnet, daß
die mit dem Erntematerial in Eingriff kommende Oberfläche (45/145) eine Vielzahl von austauschbaren Oberflächenelementen (60,63/160) aufweist,
jeder Endteil (69/169) mit einer getrennten Welle (72/173,174) versehen ist, und
die Preß- oder Quetschwalzen (44/144) weiterhin Zwischenteile (61/161) aufweisen, die parallel zu und zwischen den Endteilen angeordnet (69/169) sind und zentrale Bohrungen zur Aufnahme der inneren Enden der Wellen (72/173,174) in diesen aufweisen.

2. Feldhäcksler nach Anspruch 1,
dadurch gekennzeichnet, daß die Endteile (69/169) lösbar an der mit dem Erntematerial in Eingriff kommenden Oberfläche (45/145) durch Schraubbolzeneinrichtungen (70,71/170,171) befestigt sind, die in gleicher Weise die Elemente (60,63/160) der mit dem Erntematerial in Eingriff kommenden Oberfläche (45/ 145) festhalten.

3. Feldhäcksler nach einem der vorhergehenden Ansprüche,
dadurch gekennzeichnet, daß die Oberflächenelemente (60/160) Einrichtungen (65/165) zur Befestigung der Elemente (60,63/160) gegen eine Radialbewegung aufweisen.

4. Feldhächsler nach Anspruch 3,
dadurch gekennzeichnet, daß die Befestigungseinrichtungen eine ringförmige Verlängerung (65) entlang einer Kante eines Elementes (63) aufweisen, die in eine ringförmige Ausnehmung (66) in einer Kante eines benachbarten Elementes (60) paßt.

5. Feldhäcksler nach einem der vorhergehenden Ansprüche,
dadurch gekennzeichnet, daß zumindest zwei Oberflächenelemente (63/160) austauschbar sind.

6. Feldhäcksler nach einem der vorhergehenden Ansprüche,
dadurch gekennzeichnet, daß die Oberflächenelemente (60,63) eine allgemein zylindrische Form aufweisen.

7. Feldhäcksler nach Anspruch 6 unter Rückbeziehung auf Anspruch 2,
dadurch gekennzeichnet, daß die Schraubbolzeneinrichtungen (70,71) in den Zwischenteilen (61) eines in der Mitte liegenden Oberflächenelementes (60) befestigt sind.

8. Feldhäcksler nach Anspruch 6 oder 7,
dadurch gekennzeichnet, daß die mit dem Erntematerial in Eingriff kommende Oberfläche (45) zwei äußere Oberflächenelemente (63) aufweist, die jeweils eine Breite von weniger als einem Viertel der Breite der vollständigen Oberfläche (45) aufweisen.

9. Feldhäcksler nach Anspruch 8,
dadurch gekennzeichnet, daß die äußeren Oberflächenelemente (63) eine Breite von weniger als einem Siebtel der Breite der vollständigen Oberfläche (45) aufweisen.

10. Feldhäcksler nach einem der vorhergehenden Ansprüche,
dadurch gekennzeichnet, daß die Preß- oder Quetschwalzen (44/144) drehbar durch Lager (76) gelagert sind, deren Innenringe auf Stummelwellen (73, 74) befestigt sind, die an den Endteilen (69,169) der Preß- oder Quetschwalzen (44/144) befestigt sind.

11. Feldhäcksler nach Anspruch 10,
dadurch gekennzeichnet, daß die Preß- oder Quetschwalzen (44/144) in einem Rahmen (42) angeordnet sind und daß die Außenringe der Lager (76) in Lagergehäusen (78-81) befestigt sind, die auf der Außenseite des Rahmens (42) angeordnet sind.

12. Feldhäcksler nach Anspruch 11,
dadurch gekennzeichnet, daß jeder Rahmen (42) Schlitze (75) aufweist, die den Einbau und den Ausbau einer Preß- oder Quetschwalze (44/144) aus dem Rahmen (42) ermöglichen, während die Lager (76) und die Lagergehäuse (78-81) an der Walze befestigt bleiben.

13. Feldhäcksler nach Anspruch 11,
dadurch gekennzeichnet, daß die Stummelwellen (73,74) einer Preß- oder Quetschwalze (44/144) zwischen der Schneideinrichtung (36) und dem Rahmen (42) angeordnet sind.

14. Feldhäcksler nach Anspruch 12 oder 13,
dadurch gekennzeichnet, daß nach der Entfernung einer Preß- oder Quetschwalze (44/144) aus dem Rahmen (42) ein direkter Zugang an die Schraubbolzeneinrichtungen (70,71/170,171) zum Abbau der Endteile (69/169) ermöglicht wird, ohne daß vorher die Lagergehäuse (78-81) von der Preß- oder Quetschwalze (44/144) abgabaut werden.

15. Feldhäcksler nach einem der vorhergehenden Ansprüche,
dadurch gekennzeichnet, daß die Zwischenteile (161) kreisringförmige Vorsprünge (164) aufweisen, die mit engem Sitz in einen Hohlraum in einer Kante der Oberflächenelemente (160) passen.

16. Feldhäcksler nach Anspruch 15,
dadurch gekennzeichnet, daß die Vorsprünge (164) eine Oberfläche (166) aufweisen, die in Form eines Teils eines Kegels ausgebildet ist, der auf der Achse der Preß- oder Quetschwalze (144) zentriert ist.

17. Feldhäcksler nach Anspruch 1,
dadurch gekennzeichnet, daß die mit dem Erntematerial in Eingriff kommende Oberfläche (145) in einem Vielzahl von Oberflächenelementen (160) entlang von Linien parall zur Mittelachse der Oberfläche (145) unterteilt ist.

18. Feldhäcksler nach Anspruch 17,
dadurch gekennzeichnet, daß alle Oberflächenelemente (145) miteinander austauschbar sind.

## Revendications

1. Récolteuse de fourrage possédant un moyen de traitement de matériau de récolte contenant des grains de maïs, le moyen de traitement de matériau de récolte comprenant:
- un moyen de coupe (36) dont la fonction est de déchiqueter le matériau de récolte;
- un assemblage de tambour de compression (41), comprenant un ensemble de tambours de compression (44/144) associés et étroitement adjacents, disposés pour recevoir le matériau de récolte déchiqueté issu du moyen de coupe (36), et dont la fonction est de briser les grains de maïs dans ledit matériau de récolte, lesdits tambours comprenant une surface substantiellement cylindrique de contact (45/145) avec le matériau de récolte et deux parties d'extrémité (69/169) fixées amoviblement à ladite surface de contact (45/145) avec le matériau de récolte; et
- un moyen de souffleuse (49) recevant le matériau de récolte déchiqueté et brisé issu dudit assemblage de tambour (41) et dont la fonction est de transporter ledit matériau vers un appareil (52) suivant de manutention,
caractérisée en ce que:
ladite surface en contact (45/145) avec le matériau de récolte comprend une pluralité d'éléments (60, 63/160) de surface remplaçables;
chaque partie d'extrémité (69/169) est pourvue d'un arbre distinct (72/173, 174); et
lesdits tambours de compression (44/144) comprennent en outre des organes intermédiaires (61/161) disposés parallèlement auxdites parties d'extrémités (69/169) et entre ces dernières, et possédant des alésages centraux pour y recevoir l'extrémité intérieure desdits arbres (72/173, 174).

2. Récolteuse de fourrage selon la revendication 1, caractérisée en ce que les parties d'extrémité (69/169) sont fixées amoviblement à ladite surface (45/145) en contact avec le matériau de récolte par des moyens de boulons (70,71/170,171) retenant également les éléments (60,63/160) de la surface (45/145) entrant en contact avec le matériau de récolte.

3. Récolteuse de fourrage selon l'une quelconque des revendications précédentes, caractérisée en ce que lesdits éléments (60/1600) de surface comprennent un moyen (65/165) de fixation desdits éléments (60,63/160) pour éviter un déplacement radial.

4. Récolteuse de fourrage selon la revendication 3, caractérisée en ce que ledit moyen de fixation comprend une extension annulaire (65) le long d'un bord d'un élément (63), s'ajustant dans une encoche annulaire (66) dans un bord d'un élément adjacent (60).

5. Récolteuse de fourrage selon l'une quelconque des revendications précédentes, caractérisée en ce qu'au moins deux éléments (63/160) de surface sont interchangeables.

6. Récolteuse de fourrage selon l'une quelconque des revendications précédentes, caractérisée en ce que lesdits éléments (60, 63) de surface possèdent une forme généralement cylindrique.

7. Récolteuse de fourrage selon la revendication 6 lorsqu'elle se rapporte à la revendication 2, caractérisée en ce que les moyens de boulons (70, 71) sont fixés à des organes intermédiaires (61) d'un élément central (60) de surface.

8. Récolteuse de fourrage selon la revendication 6 ou 7, caractérisée en ce que la surface (45) entrant en contact avec le matériau de récolte comprend deux éléments extérieurs (63) de surface ayant chacun une largeur inférieure à un quart de la largeur de la surface complète (45).

9. Récolteuse de fourrage selon la revendication 8, caractérisée en ce que les éléments extérieurs (63) de surface possèdent une largeur de moins d'un septième de la largeur de la surface complète (45).

10. Récolteuse de fourrage selon l'une quelconque des revendications précédentes, caractérisée en ce que les tambours (44/144) de compression sont supportés rotativement par des roulements (76) dont les bagues intérieures sont montées sur des tourillons (73, 74) fixés aux parties d'extrémité (69/169) des tambours (44/144) de compression.

11. Récolteuse de fourrage selon la revendication 10, caractérisée en ce que les tambours (44/144) de compression sont disposés dans un châssis (42) et que les bagues extérieures desdits roulements (76) sont montées dans des paliers (78-81) positionnés à l'extérieur dudit châssis (42).

12. Récolteuse de fourrage selon la revendication 11, caractérisée en ce que ledit châssis (42) comprend des encoches (75) permettant l'installation et l'enlèvement d'un tambour (44/144) de compression par rapport audit châssis (42), tandis que les roulements (76) et les paliers (78-81) demeurent attachés audit tambour.

13. Récolteuse de fourrage selon la revendication 11, caractérisée en ce que les tourillons (73,74) d'un tambour (44/144) de compression sont montés entre le moyen de coupe (36) et ledit châssis (42).

14. Récolteuse de fourrage selon la revendication 12 ou 13, caractérisée en ce que, après l'enlèvement d'un tambour (44/144) de compression hors du châssis (42), un accès direct est fourni aux moyens de boulons (70,71/170,171) pour démonter les parties d'extrémités (69/169), sans démontage préalable des paliers (78-81) hors du tambour (44/144) de compression.

15. Récolteuse de fourrage selon l'une quelconque des revendications précédentes, caractérisée en ce que lesdits organes intermédiaires (161) possèdent des saillies annulaires (164) s'ajustant étroitement dans une cavité dans un bord des éléments (160) de surface.

16. Récolteuse de fourrage selon la revendication 15, caractérisée en ce que lesdites saillies (164) possèdent une surface (166) dont la forme est une portion d'un cône centré sur l'axe du tambour (144) de compression.

17. Récolteuse de fourrage selon la revendication 1, caractérisée en ce que la surface (145) entrant en contact avec le matériau de récolte est divisée en une pluralité d'éléments (160) de surface suivant des lignes parallèles à l'axe central de ladite surface (145).

18. Récolteuse de fourrage selon la revendication 17, caractérisée en ce que tous les éléments (145) de surface sont interchangeables.
